# EUROPEAN PATENT APPLICATION

(11) **EP 4 625 787 A1**
(43) Date of publication of application: **01.10.2025**
(21) Application number: 24275034.7
(22) Date of filing: 25.03.2024
(51) Int. Cl.: H02M 1/00, H02M 7/219, H02M 3/00, H02M 3/335

(54) **SYNCHRONOUS RECTIFIER**

(71) Applicant: Hamilton Sundstrand Corporation, Charlotte, NC 28217 (US)
(72) Inventor: LEFLEY, Paul William, Lutterworth (GB); CLEMENTS, Adam Edwin, Redditch (GB)
(74) Representative: Dehns

(57) **Abstract**

A synchronous rectifier (100) including a first rectifier current path. The first rectifier current path has a first (104) and second (105) switching arrangement, which are arranged in series. The first switching arrangement (104) includes a first switch and the second switching arrangement includes a second switch. A first current sensor (108) is arranged to measure a current through the first rectifier current path; and a controller (110) is arranged to operate the first switch and the second switch based on the current measured by the first current sensor (108).

## Description

### Technical Field

This application relates to synchronous rectifiers and methods of synchronous rectification.

### Background

Rectifiers are used in numerous applications in the field of electronics. Examples include voltage conversion, such as conversion from AC to DC, or stepping a voltage up or down.

Passive rectifiers use passive circuit elements, such as diodes, to rectify an input waveform. Passive rectifiers provide some intrinsic safety, as the passive circuit elements generally only ever allow current to flow in one direction along a rectifier current path. However, passive rectifiers are relatively inefficient due to losses in the passive elements.

These losses can be reduced by using active circuit elements such as switches or transistors with lower losses. However, while such active rectifiers can be more efficient than passive rectifiers, there are safety considerations that have to be taken into account because the active circuit elements generally allow current to flow in any direction when they are conductive. This can permit the flow of current in the wrong direction through the rectifier and/or the load if the active circuit elements are not carefully controlled. Thus a synchronous rectifier has active elements that are carefully controlled to effect the rectification correctly and safely.

Generally, the active circuit elements in synchronous rectifiers are controlled by measuring the voltage across the respective circuit element and operating the circuit element to conduct when the respective voltage is above a threshold. However, this typically requires that each active circuit element in a synchronous rectifier has its own voltage sensor. Additionally, this can require measurements of very low voltages, e.g. relative to other voltages in the surrounding circuit (e.g. the full rectifier output voltage). In such examples, the surrounding voltages may cause electromagnetic interference which could result in inaccurate voltage measurements and thus incorrect switching of the active circuit elements.

The challenge of ensuring safe control of synchronous rectifiers is exacerbated if the current through the synchronous rectifier and/or the load is hard to predict. For example, when the load current is low there may be discontinuous conduction in the rectifier, and hence reverse conduction if the rectifier switches are not turned-off in time.

The current through the synchronous rectifier and/or the load may also be hard to predict when the impedance of the input to the synchronous rectifier is complex, i.e. it is at least partially inductive or capacitive, and/or when the impedance of the load at the output of the synchronous rectifier is complex. Applications where the impedance of the input to the synchronous rectifier is complex include resonant converters which include a resonant circuit such as a resonant tank.

For these reasons, an improved control and design of synchronous rectifiers is desirable.

### Summary

According to a first aspect, the disclosure provides a synchronous rectifier comprising:
a first rectifier current path comprising a first switching arrangement and a second switching arrangement arranged in series;
the first switching arrangement comprising a first switch operable to selectively provide a first current path through the first switching arrangement;
the second switching arrangement comprising a second switch operable to selectively provide a first current path through the second switching arrangement;
the synchronous rectifier further comprising:
   a first current sensor arranged to measure a current through the first rectifier current path; and
   a controller arranged to operate the first switch and the second switch based on the current measured by the first current sensor.

The use of a current sensor means that the controller does not require measurement of very low voltages across the switching arrangements, which are often very susceptible to noise, to operate the first switch and the second switch. Current measurements have been found to provide a more robust solution for control of the switching arrangements.

Additionally, only a single current sensor is required on the first rectifier current path to control operation of both the first switch and the second switch. This can provide a cheaper and/or simpler solution than using two voltage sensors (one for each of the first switching arrangement and the second switching arrangement).

The synchronous rectifier may be a half-wave rectifier or a full-wave rectifier. For example, the synchronous rectifier may also comprise a second rectifier current path such that the first rectifier current path and the second rectifier current path in combination provide full-wave rectification. For example, the first rectifier current path and the second rectifier current path may be operational for different phases of the input. Additionally, the synchronous rectifier may have any rectifier topology. For instance, the synchronous rectifier may have a push-pull topology, a half-bridge topology, a full-bridge topology, a centre-tapped full wave topology or the like.

It is sufficient in some examples for the first current sensor to measure a direction of current to control operation of the first switch and the second switch. For example, the controller may be arranged to prevent current flowing in the wrong direction through the first rectifier current path by turning off the first switch and the second switch when the measured current is in the wrong direction.

However, in some examples, the first current sensor is arranged to measure a magnitude of the current through the first rectifier current path; and the controller is arranged to operate the first switch and the second switch based on the magnitude of the current measured by the first current sensor. This can be useful to initiate switching action in advance of an adverse current condition, e.g. to accommodate the finite switch on or switch off time of the switching arrangement.

In some examples, the controller is arranged to operate the first switch and the second switch in a non-conducting state if the current measured by the first current sensor is less than a first threshold. Hence, the first switch and the second switch may be switched off when the measured current is small, before the direction of current changes to be in the wrong direction through the first rectifier current path. This may help to ensure that no current is allowed to flow in the wrong direction through the first rectifier current path. The first threshold may be selected based on particular implementations to ensure that the first and/or second switches have time to transition fully to a non-conducting state before the current reverses direction.

The first threshold may be a turn-on threshold, which is valid if the first switch and the second switch are initially in a non-conducting state. The first threshold may be a turn-off threshold, which is valid if the first switch and the second switch are initially in a conducting state. The turn-on threshold and the turn-off threshold may be the same, or they may be different.

For example, it may take time for the first switch and the second switch to change from one state to another (e.g. from conducting to non-conducting). Therefore, some examples may switch to a conducting state at a low and rising current, but transition to a non-conducting state at a higher level of current during a rapid descent in current. For instance, if a resonant power converter is operating above the resonant frequency, the first and second switches may be operated to switch off at a higher current threshold so as to provide a dead-time between the first and second switches turning off and the third and fourth switches turning on. Such a dead-time may be useful to avoid a direct short circuit across the load through first and fourth or second and third switch paths.

In some examples, the first current sensor is a Hall effect sensor. Hall effect sensors can provide accurate measurement of both the magnitude and direction of the current through the first rectifier current path.

The first current sensor may in other examples be a shunt current sensor, a Rogowski coil sensor or the like.

In some examples, there may only be one current path through any of the switching arrangements. For instance, the first switching arrangement may merely include the first switch, and the first (and only) current path through the first switching arrangement may be the current path through the first switch. For such switching arrangements, it is possible to control the switching off of the switch based on the current measured through the rectifier current path, but alternative control arrangements may be required to control the switching on of the switch.

In some examples, any of the switching arrangements may comprise a second current path through the switching arrangement arranged in parallel with the first current path through the switching arrangement. For instance, the first switching arrangement may include a first current path comprising the first switch and a second, parallel, current path comprising a diode. For such switching arrangements, the current flowing through the second current path may be used to control the switching on of the switching arrangement's switch.

In some examples, the second current path through any of the switching arrangements may be configured to allow current to flow through the rectifier current path only in one direction, e.g. a first direction. Thus, it may be possible to prevent any current flow in the wrong direction through the rectifier current path in a second, opposite direction.

In some examples, the second current path through any of the switching arrangements may comprise a diode arranged to allow current to flow through the rectifier current path only in one direction, e.g. the first direction.

The switch of any of the switching arrangements could be an electronic switch, a mechanical switch or the like. In some examples, the switch of any of the switching arrangements may be a transistor. Transistors are particularly well suited for various power electronics applications due to their low noise and fast response.

In some examples, the switch of any of the switching arrangements may be a transistor, and the transistor may comprise the diode. For instance, the first transistor may be a field-effect-transistor (FET) such as a metal-oxide-semiconductor field-effect transistor (MOSFET) or an insulated gate FET or the like with an integrated body diode arranged in parallel with the main (e.g. drain-source) switched current path. Integrating both circuit elements in the same component provides a particularly straightforward and convenient implementation.

In some examples, the synchronous rectifier may comprise a second rectifier current path comprising a third switching arrangement; the third switching arrangement comprising a third switch operable to selectively provide a first current path through the third switching arrangement; wherein the controller is arranged to operate the third switch based on the current measured by the first current sensor. By controlling operation of the third switch based on the current measured by the first current sensor, it may be possible to prevent short-circuits across the synchronous rectifier, e.g. by preventing the third switch from conducting when there is a current flowing through the first rectifier current path. This can therefore provide a beneficial safety feature by blocking the second rectifier current path when the first rectifier current path is operational.

In some examples, the controller is arranged to operate the third switch in a non-conducting state if the current measured by the first current sensor is greater than a second threshold. The second threshold may be selected according to particular implementations, but in some examples the second threshold may be zero, i.e. any positive current sensed in the first current sensor may force a non-conducting state in the third switch.

In some examples, the second rectifier current path comprises a fourth switching arrangement arranged in series with the third switching arrangement; the fourth switching arrangement comprising a fourth switch operable to selectively provide a first current path through the fourth switching arrangement; wherein the controller is arranged to operate the fourth switch based on the current measured by the first current sensor. The controller may be arranged to operate the fourth switch in a non-conducting state if the current measured by the first current sensor is greater than a second threshold. As above, the second threshold may in some examples be zero.

The first rectifier current path and the second rectifier current path may form an H-bridge. The H-bridge may provide full-wave rectification.

In some examples, the synchronous rectifier comprises a second current sensor arranged to measure a current through the second rectifier current path; and the controller is arranged to operate the first switch and the second switch based on the current measured by the second current sensor. In the same manner as discussed above, this arrangement allows the first and second switches to be controlled based on current in a different rectifier current path. For example, the first switch and the second switch may be prevented from conducting when there is a current flowing through the second rectifier current path.

In some examples, the controller is arranged to operate the first switch and the second switch in a non-conducting state if the current measured by the second current sensor is greater than a third threshold. As discussed above, the third threshold may be zero. More generally, the second threshold and the third threshold may be different, but in some examples they will be the same so that both rectifier current paths are controlled in the same manner (e.g. each path is controlled to be non-conducting when the other path is conducting).

In some examples, the synchronous rectifier is arranged to rectify an input waveform; and the controller is arranged to operate the first switch and the second switch based on a polarity of the input waveform. Typically, a current may only be expected to flow through the first rectifier current path when the input waveform has a certain polarity. For example, the first rectifier current path may be expected to block current flow in one direction (due to a first polarity input) and expected to permit current flow in the other direction (due to a second polarity input). Therefore, controlling operation of the first switch and the second switch based on the polarity of the input waveform can help ensure safe operation by, for example, operating the first switch and the second switch in a non-conducting state when the input waveform has a polarity which would cause the wrong (undesired) current flow.

In some examples, the controller is arranged to operate the first switch and the second switch in a non-conducting state if the input waveform has a first polarity. As mentioned, this may help improve the safety of operation of the synchronous rectifier.

In some examples, the controller is arranged to use control logic to determine whether to operate the first switch and the second switch in a conducting state.

In some examples, the control logic may comprise an AND gate or AND function which requires at least two (and optionally all three) of the following criteria to be met for the controller to operate the first switch and the second switch in a conducting state:
i) the current measured by the first current sensor is greater than a first threshold;
ii) the current measured by the second current sensor is less than a third threshold; and
iii) the input waveform has a predetermined polarity.

In some examples the controller is arranged to operate the first switch and the second switch to a conducting state when at least two (and optionally all three) of the following criteria are met:
i) the first current sensor detects a first current condition;
ii) the second current sensor detects a second current condition; and
iii) an input voltage applied to the first rectifier current path is determined to have a predetermined polarity.

The first current condition may be that the first current sensor measures a current above a first threshold. The second current condition may be that the second current sensor measures a current below a second threshold. The polarity of the input voltage applied to the first rectifier current path may be determined from a drive signal applied to an inverter that drives the synchronous rectifier.

In some examples, the controller comprises an AND gate or AND function which is arranged to receive a first signal indicative of the first condition from the first current sensor, a second signal indicative of the second condition from the second current sensor, and a third signal indicative of the input voltage polarity from an inverter controller, and wherein the AND gate or AND function is arranged to output a control signal for controlling the first switch and the second switch.

According to a second aspect, the disclosure provides: a synchronous rectifier comprising:
a first rectifier current path comprising a first switching arrangement; and
a second rectifier current path comprising a second switching arrangement;
the first switching arrangement comprising a first switch operable to selectively provide a first current path through the first switching arrangement;
the second switching arrangement comprising a second switch operable to selectively provide a first current path through the second switching arrangement;
the synchronous rectifier further comprising:
   a first current sensor arranged to measure a current through the first rectifier current path; and
   a controller arranged to operate the first switch and the second switch based on the current measured by the first current sensor.

As with the first aspect discussed above, the controller does not require measurement of very low voltages across the switching arrangements, which are often very susceptible to noise, to operate the first switch and the second switch. Furthermore, the voltage across a conducting switch falls to almost zero, by design, to increase the efficiency of the circuit. This can make it very difficult to sense the polarity of the voltage across the conducting switch. Current measurements have been found to provide a more robust solution for control of the switching arrangements.

By controlling operation of the second switch (on the second rectifier current path) based on the current measured by the first current sensor (in the first rectifier current path), the risk of short-circuits across the synchronous rectifier can be reduced, e.g. by preventing the second switch from conducting when there is a current flowing through the first rectifier current path. Notably the current sensor on one rectifier current path provides control input for switching arrangements on two different rectifier current paths, thereby providing a greater degree of control over the synchronous rectifier and/or improved safety.

It will be appreciated that any of the features of the first aspect of the disclosure may apply equally to the second aspect. For instance, the first rectifier current path of the second aspect may have any or all of the features of the first rectifier current path of the first aspect. The first switching arrangement of the second aspect may have any or all of the features of the first switching arrangement of the first aspect.

Similarly, the second rectifier current path of the second aspect may have any or all of the features of the second rectifier current path of the first aspect.

For instance, the second switching arrangement of the second aspect may have any or all of the features of the third switching arrangement of the first aspect.

Likewise, the controller of the second aspect may have any or all of the features of the controller of the first aspect. For instance, the controller may be arranged to control the first switching arrangement of the second aspect in a similar manner to the first switching arrangement of the first aspect. Similarly, the controller may be arranged to control the second switching arrangement of the second aspect in a similar manner to the third switching arrangement of the first aspect.

The disclosure extends to a converter comprising:
an input stage arranged to provide an input waveform; and
a synchronous rectifier, according to any examples of the first aspect or the second aspect of the disclosure, arranged to rectify the input waveform.

The input waveform may be an input current or an input voltage.

In some examples, the converter comprises an inverter arranged to provide an alternating waveform. The alternating waveform may be an alternating current or an alternating voltage. For instance, the converter may be arranged to convert a direct input voltage to a direct output voltage, and the inverter may be arranged to receive the direct input voltage and provide an alternating output voltage, such as an alternating square wave output voltage or an alternating sinusoidal output voltage, as part of the voltage conversion.

In some examples, the controller is arranged to operate the first switch in a non-conducting state if the alternating waveform has a first predetermined polarity. The first predetermined polarity may be a polarity that would cause current to flow through first rectifier current path in a direction contrary to that desired for rectification. For example, the controller may be arranged to operate the first switch in a non-conducting state when the inverter provides an output with a first polarity as this may correspond to the input to the synchronous rectifier having a first polarity. As previously mentioned, typically, a current may only be expected to flow through the first rectifier current path when the input waveform has a certain polarity. Therefore, controlling operation of the first switch based on the polarity of the input waveform in this manner can help ensure safe operation.

In some examples, the controller's control logic may be modelled as an AND gate or AND function which requires the following criteria to be met for the controller to operate the first switch and the second switch in a conducting state, e.g. in addition to any one or more of the previously mentioned criteria:
iv) the alternating waveform provided by the inverter has a second predetermined polarity. The second predetermined polarity may be a polarity that would cause current to flow through the first rectifier current path in a desired direction for rectification.

In some examples, the input stage is a switched input stage comprising at least a first input stage switch arranged to be driven by a first input switch drive signal; and wherein the controller is arranged to operate the first switch and the second switch based on the first input switch drive signal. The switched input stage may be a switched inverter which may be a half bridge or full bridge inverter or a push-pull inverter or the like. The input signals for the switches in the inverter are already readily available for control of the inverter. Therefore using at least one of these signals to provide a control signal for the rectifier provides a neat and cost efficient solution.

In some examples, the input stage comprises a second input stage switch driven by a second input switch drive signal; wherein a first inverter current path comprises the first input stage switch and a second inverter current path comprises the second input stage switch (e.g. the first inverter current path and the second inverter current path may be in an H-bridge configuration). In such examples, the controller may be arranged to operate the switch(es) of the first rectifier current path based on the first input switch drive signal and the switch(es) of the second rectifier current path based on the second input switch drive signal. In such arrangements, the control signals for both legs of a full bridge on the inverter are each used to control the corresponding legs of a full bridge on the rectifier. It will be appreciated that there is often some dead time between the end of one input signal for one inverter input and the start of the next input signal for the other inverter input, to ensure that the inverter-side switches are not conductive simultaneously. It is beneficial to take this dead time into account when controlling the rectifier stage.

In some examples, the first input switch drive signal is provided to a one shot pulse generating circuit and the one shot pulse generating circuit is arranged to start generating an output pulse when it receives a start of an input pulse from the first input switch drive signal and is arranged to stop generating an output pulse at the earlier of i) an end of the input pulse or ii) when an output pulse time limit is reached; and the controller is arranged to operate the first switch and the second switch based on the output pulse from the one shot pulse generating circuit.

The one shot pulse generating circuit may be a resettable monostable circuit. Such a resettable monostable circuit produces a time-limited pulse with a pulse width defined by an internal configuration or parameter of the monostable (e.g. an internal time constant). When triggered, e.g. by a rising or falling edge at its trigger input, the monostable outputs a pulse of that predefined width. If the resettable monostable receives a reset signal at a reset input, it terminates its output pulse early. By providing the input signal to both the trigger input and a reset input, the input pulse can cause the monostable output pulse to have a pulse width equal to the input pulse, but limited to a maximum of the predefined width of the monostable circuit.

The one shot pulse generating circuit may be implemented digitally. For example, the one shot pulse generating circuit may comprise a resettable timer or a resettable counter. Such a circuit may output a pulse of a predefined pulse width (being a predefined time or a predefined number of counts) and may be reset early upon receipt of a reset signal.

In some examples, the converter is a resonant converter and the input stage comprises a resonant circuit having a resonant period. The resonant circuit may be, for example, a resonant tank circuit comprising an inductance (e.g. an inductor), and a capacitance (e.g. a capacitor). The input to the resonant circuit may be, for example, the output from an inverter. In other examples the alternating waveform may simply be an AC waveform applied to the converter. The output pulse time limit (e.g. from the one shot pulse generating circuit) may be equal to or less than half the resonant period of the resonant circuit.

By time limiting the conduction window of the first switch to less than or equal to half the resonant period of the resonant circuit, it is possible to ensure that the first switch does not conduct after the resonant circuit has completed a half cycle. This arrangement is particularly convenient when the input drive signal (e.g. to an input inverter) has a conduction period longer than half the resonant period. In such circumstances, it is desirable to shut off the synchronous rectifier so that no load current flows in the rectifier. The time limited conduction window described above allows the maximum use to be made of the input waveform while it is shorter than half the resonant period, while ensuring that its influence on the rectifier does not extend past that half resonant period

In some examples, the converter comprises a transformer arranged to provide galvanic isolation between an input stage and the synchronous rectifier stage. Galvanic isolation may provide components in or connected to the input stage with protection from high currents or voltages in the rectifier stage. Similarly, galvanic isolation may provide the rectifier stage or a load attached to the rectifier stage with protection from high currents or voltages in the input stage.

According to a third aspect, the disclosure provides a converter comprising:
an input stage arranged to provide an output waveform;
a synchronous rectifier arranged to rectify the output waveform; and
a controller;
the synchronous rectifier comprising a first rectifier current path comprising a first switching arrangement;
the first switching arrangement comprising a first switch operable to selectively provide a first current path through the first switching arrangement;
the input stage comprising a resonant circuit, having a resonant period, the input stage being arranged to receive an alternating input waveform;
wherein, the controller is arranged to operate the first switch in a non-conducting state if the alternating input waveform has a first polarity for longer than a maximum duration;
wherein the maximum duration is equal to or less than half the resonant period.

As previously mentioned, by time limiting the conduction window of the first switch to less than or equal to half the resonant period of the resonant circuit, it is possible to ensure that the first switch does not conduct after the resonant circuit has completed a half cycle, thereby improving the safety and reliability of the converter.

The alternating input waveform may be any waveform indicative of the polarity of the output waveform provided by the input stage. For instance, the alternating waveform may comprise a first input switch drive signal used to control operation of a first input stage switch of the input stage.

The synchronous rectifier of the third aspect may include any one or more of the features of the synchronous rectifier of the previously discussed first aspect or second aspect.

Similarly, the converter of the third aspect may include any or all of the features of the converters discussed above in relation to the first or second aspects.

In particular, any of the following features may apply to the third aspect of the disclosure.

The alternating input waveform may be provided to a one shot pulse generating circuit and the one shot pulse generating circuit may be arranged to start generating an output pulse when it receives a start of an input pulse from the alternating input waveform and may be arranged to stop generating an output pulse at the earlier of i) an end of the input pulse or ii) when an output pulse time limit is reached; and the controller may be arranged to operate the first switch based on the output pulse from the one shot pulse generating circuit.

In some examples, the alternating input waveform is a first alternating input waveform and the switched input stage comprises a second input stage switch driven by a second alternating input waveform, wherein the first alternating input waveform controls a first inverter current path (i.e. a first inverter leg) and the second alternating input waveform controls a second inverter current path (i.e. a second inverter leg), e.g. in an H-bridge configuration, wherein the synchronous rectifier comprises a second rectifier current path comprising a second switching arrangement; the second switching arrangement comprising a second switch operable to selectively provide a first current path through the second switching arrangement; wherein the controller is arranged to operate the second switch in a non-conducting state if the second alternating input waveform has a first polarity for longer than a second maximum duration; wherein the second maximum duration is equal to or less than half the resonant period. In such arrangements, the control signals for both legs of a full bridge on the input are each used to control the corresponding legs of a full bridge on the rectifier. It will be appreciated that there is often some dead time between the end of one input signal for one inverter input and the start of the next input signal for the other inverter input, to ensure that the inverter-side switches are not conductive simultaneously. It is beneficial to take this dead time into account when controlling the rectifier stage. The second maximum duration may be the same as the first maximum duration.

According to a fourth aspect, the disclosure provides a method of operating a synchronous rectifier, the synchronous rectifier comprising:
a first rectifier current path comprising a first switching arrangement and a second switching arrangement arranged in series;
the first switching arrangement comprising a first switch operable to selectively provide a first current path through the first switching arrangement;
the second switching arrangement comprising a second switch operable to selectively provide a first current path through the second switching arrangement;
the method comprising:
   measuring a current through the first rectifier current path; and
   operating the first switch and the second switch based on the current measured through the first rectifier current path.

The synchronous rectifier may comprise a first current sensor arranged to measure the current through the first rectifier current path.

The synchronous rectifier may further comprise a controller arranged to operate the first switch and the second switch based on the current measured through the first rectifier current path.

It will be understood that the method of the fourth aspect may be used to control operation of the synchronous rectifier of the first aspect. Thus, any of the features, e.g. optional features, of the first aspect may apply equally to the fourth aspect.

In particular, the following features may apply to this method.

The method may comprise operating the first switch and the second switch to a non-conducting state if the current measured through the first rectifier current path is less than a first threshold.

The first switching arrangement may comprise a second current path arranged in parallel with the first current path and configured to allow current to flow through the second current path only in a first direction.

Similarly, the second switching arrangement may comprise a second current path arranged in parallel with the first current path, and configured to allow current to flow through the second current path only in a first direction.

The synchronous rectifier may comprise a second rectifier current path comprising a third switching arrangement; the third switching arrangement comprising a third switch operable to selectively provide a first current path through the third switching arrangement.

The method may comprise operating the third switch based on the current measured by the first current sensor.

The method may comprise measuring a current through the second rectifier current path; and operating the first switch and the second switch based on the current measured through the second rectifier current path.

The method may comprise operating the first switch and the second switch to a non-conducting state if the current measured through the second rectifier current path is greater than a third threshold.The method may comprise operating the first switch and the second switch to a conducting state when:
i) the current measured through the first rectifier current path has a first current condition;
ii) the current measured through the second rectifier current path has a second current condition; and
iii) an input voltage applied to the first rectifier current path is determined to have a predetermined polarity.

The method may comprise receiving a first signal indicative of the first condition, e.g. from the first current sensor; receiving a second signal indicative of the second condition, e.g. from the second current sensor; and receiving a third signal indicative of the input voltage polarity, e.g. from an inverter controller; and outputting a control signal for controlling the first switch and the second switch.

According to a fifth aspect, the disclosure provides a method of operating a synchronous rectifier, the synchronous rectifier comprising:
a first rectifier current path comprising a first switching arrangement; and
a second rectifier current path comprising a second switching arrangement;
the first switching arrangement comprising a first switch operable to selectively provide a first current path through the first switching arrangement;
the second switching arrangement comprising a second switch operable to selectively provide a first current path through the second switching arrangement;
the method comprising:
   measuring a current through the first rectifier current path; and
   operating the first switch and the second switch based on the current measured by the first current sensor.

It will be understood that the method of the fifth aspect may be used to control operation of the synchronous rectifier of the second aspect. Thus, any of the features, e.g. optional features, of the second aspect may apply equally to the fourth aspect.

Similarly, any of the, e.g. optional, features of the fourth aspect may apply equally to the fifth aspect.

The synchronous rectifier may comprise a first current sensor arranged to measure the current through the first rectifier current path.

The synchronous rectifier may comprise a controller arranged to operate the first switch and the second switch based on the current measured through the first rectifier current path.

The disclosure extends to a method of operating a converter, the converter comprising:
a synchronous rectifier, according to any examples of the synchronous rectifier of the fourth aspect or the fifth aspect of the disclosure;
the method comprising:
   providing an input waveform; and
   rectifying the input waveform
a method of operating the synchronous rectifier, according to any examples of the method of the fourth aspect or the fifth aspect of the disclosure.

The converter may comprise an input stage arranged to provide the input waveform.

It will be understood that this method may be used to control operation of the previously described converter. Thus, any of the features, e.g. optional features, of the previously described converter may apply equally to this method.

In particular, the following features may apply to this method.

The input stage may be a switched input stage comprising at least a first input stage switch driven by a first input switch drive signal.

The method may comprise operating the switch(es) of the first rectifier current path based on the first input switch drive signal.

The input stage may comprise a second input stage switch driven by a second input switch drive signal; wherein a first inverter current path comprises the first input stage switch and a second inverter current path comprises the second input stage switch. In such examples, the method may comprise operating the switch(es) of the second rectifier current path based on the second input switch drive signal.

The method may comprise: providing the first input switch drive signal to a one shot pulse generating circuit; starting to generate an output pulse from when the one shot pulse generating circuit receives the first input switch drive signal; stopping generation of the output pulse at the earlier of i) an end of first input switch drive signal or ii) when an output pulse time limit is reached; and operating the first switch and the second switch based on the output pulse.

The converter may be a resonant converter, wherein the input stage comprises a resonant circuit having a resonant period; and wherein the output pulse time limit is equal to or less than half the resonant period.

According to a sixth aspect, the disclosure provides a method of operating a converter, the converter comprising:
an input stage arranged to provide an output waveform;
a synchronous rectifier arranged to rectify the output waveform; and
the synchronous rectifier comprising a first rectifier current path comprising a first switching arrangement;
the first switching arrangement comprising a first switch operable to selectively provide a first current path through the first switching arrangement;
the input stage comprising a resonant circuit, having a resonant period,
the method comprising:
   the input stage receiving an alternating input waveform;
   operating the first switch in a non-conducting state if the alternating input waveform has a first polarity for longer than a maximum duration;
   wherein the maximum duration is equal to or less than half the resonant period.

The method may comprise providing the output waveform, e.g. to the synchronous rectifier.

The method may comprise rectifying the output waveform, e.g. using the synchronous rectifier.

It will be understood that the method of the sixth aspect may be used to control operation of the converter of the third aspect. Thus, any of the features, e.g. optional features, of the third aspect may apply equally to the sixth aspect.

For instance, in some examples, the input stage may be a switched input stage comprising a first input stage switch driven by a first alternating input waveform and a second input stage switch driven by a second alternating input waveform, wherein the first input switch drive signal controls a first inverter current path and the second input switch drive signal controls a second inverter current path (e.g. in an H-bridge configuration), wherein the synchronous rectifier comprises a second rectifier current path comprising a second switching arrangement; the second switching arrangement comprising a second switch operable to selectively provide a first current path through the second switching arrangement; wherein, the method comprises (e.g. the controller) operating the second switch in a non-conducting state if the second alternating input waveform is longer than a second maximum duration; wherein the second maximum duration is equal to or less than half the resonant period.

The method of the sixth aspect may include any one or more of the features of the method of the previously discussed fourth aspect or fifth aspect.

In particular, the following features may apply to this method.

The input stage may comprise a second input stage switch driven by a second alternating input waveform; wherein a first inverter current path comprises the first input stage switch and a second inverter current path comprises the second input stage switch. In such examples, the method may comprise operating the switch(es) of the second rectifier current path based on the second alternating input waveform.

The method may comprise: providing the first alternating input waveform to a one shot pulse generating circuit; starting to generate an output pulse from when the one shot pulse generating circuit receives the first alternating input waveform; stopping generation of the output pulse at the earlier of i) an end of first alternating input waveform or ii) when an output pulse time limit is reached; and operating the first switch based on the output pulse.

### Brief Description of Drawings

One or more non-limiting examples will now be described, by way of example only, and with reference to the accompanying figures in which:
Figure 1 shows a synchronous rectifier for rectifying an alternating input voltage to provide a rectified output voltage;
Figure 2 shows two AND gates representing logic functions used by the controller of the synchronous rectifier of Figure 1;
Figure 3 shows an LLC voltage converter which includes the synchronous rectifier of Figure 1;
Figure 4 shows a logic table corresponding to the logic functions represented by the AND gates shown in Figure 2;
Figure 5 shows waveforms of voltages shown in Figure 3 when the LLC voltage converter of Figure 3 is operated;
Figure 6 shows the timing of a monostable circuit compared with the current in a rectifier phase; and
Figure 7 shows a resettable monostable which may be used by the controller of the synchronous rectifier shown in Figures 1 and 3.

### Detailed Description

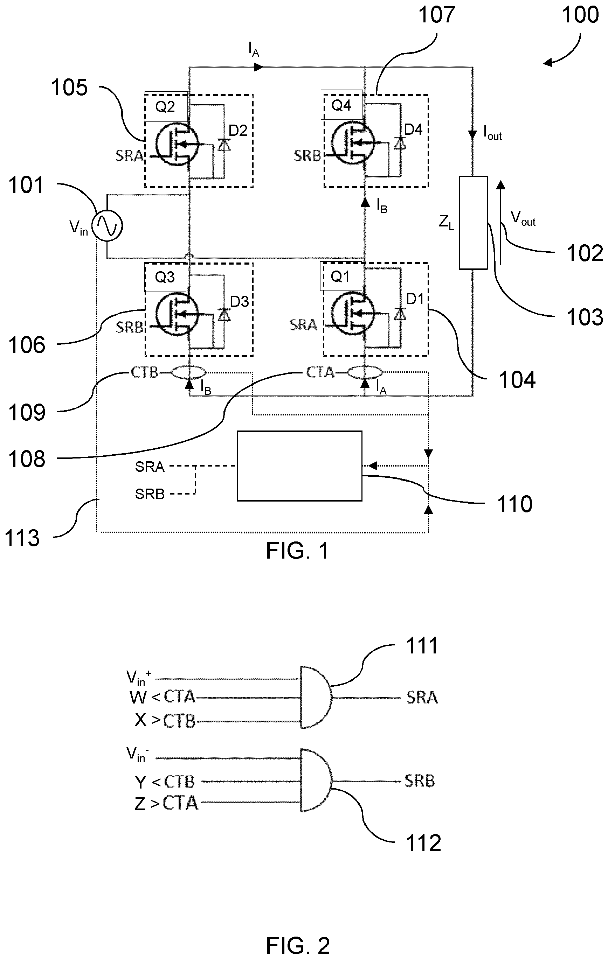

Figure 1 shows a synchronous rectifier 100 for rectifying an alternating input voltage Vᵢₙ 101 to provide a rectified output voltage Vₒᵤₜ 102. In use, the output voltage Vₒᵤₜ 102 is applied to an attached load Z_{L} 103.

The synchronous rectifier 100 includes a first switching arrangement 104 in series with a second switching arrangement 105. The synchronous rectifier 100 also includes a third switching arrangement 106 in series with a fourth switching arrangement 107.

The first switching arrangement 104 has a first current path which includes a first switch Q1. The first switch Q1 is operable to allow current to flow through the first current path when in a conducting state, and to prevent the flow of current in a non-conducting state.

The first switching arrangement 104 also has a second current path in parallel with the first current path. The second current path includes a diode D1, which only allows current to flow in one direction.

While it is possible for the switch Q1 and the diode D1 to be separate circuit elements, in this example the first switching arrangement 104 is a metal-oxide-semiconductor field-effect transistor (MOSFET) which has an integrated body diode D1 and switch Q1 in parallel.

The second 105, third 106 and fourth 107 switching arrangements are similar to the first switching arrangement 104, including respective switches Q2, Q3, Q4 and diodes D2, D3, D4.

In combination, the first 104 and second 105 switching arrangements provide a first rectifier current path, and the third 106 and fourth 107 switching arrangements provide a second rectifier current path. The first and second rectifier current paths together form an H-bridge between the input voltage Vᵢₙ 101 and the load Z_{L} 103.

The synchronous rectifier 100 has a first current sensor CTA 108 and a second current sensor CTB 109. In use, the first current sensor CTA 108 measures the current I_{A} through the first switching arrangement 104, and the second current sensor CTB 109 measures the current I_{B} through the third switching arrangement 106.

The synchronous rectifier 100 also has a controller 110 for controlling the first 104, second 105, third 106 and fourth 107 switching arrangements. In use, the controller 110 receives the current measurements from the first 108 and second 109 current sensors, as well as a signal 113 which indicates the polarity of the input voltage Vᵢₙ 101.

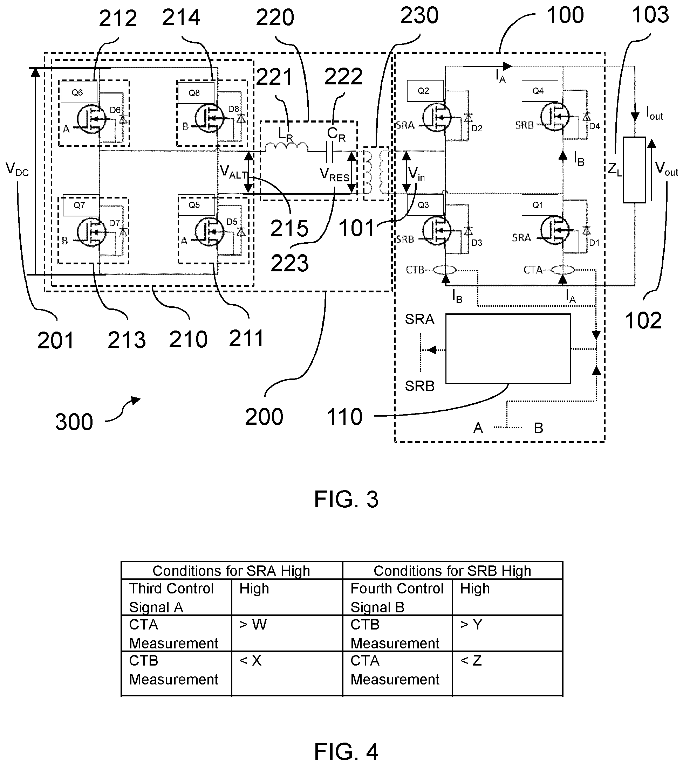

The signal 113 which indicates the polarity of the input voltage Vᵢₙ 101 may be provided by a measurement of the input voltage Vᵢₙ 101. However, as will become apparent from the description of Figures 3 to 6, the signal may instead be, for example, a signal which relates to the operation of an inverter upstream of the synchronous rectifier 100.

In use, the controller 110 selectively provides a first control signal SRA and a second control signal SRB. The first switch Q1 and the second switch Q2 are operated to conduct when the controller 110 provides the first control signal SRA. The third switch Q3 and the fourth switch Q4 are operated to conduct when the controller 110 provides the second control signal SRB.

In use, the synchronous rectifier 100 only allows current to flow through the first rectifier current path, indicated by I_{A}, when the input voltage Vᵢₙ 101 is positive, thus providing half-wave rectification of the input voltage Vᵢₙ 101. Additionally, the synchronous rectifier 100 only allows current to flow through the second rectifier current path, indicated by I_{B}, when the input voltage Vᵢₙ 101 is negative, thus providing half-wave rectification of the input voltage Vᵢₙ 101. Therefore, in use, the direction of the current Iₒᵤₜ through the load Z_{L} 103 is always the same, regardless of the polarity of the input voltage Vᵢₙ 101. Hence, the first and second rectifier current paths, in combination, provide full-wave rectification of the input voltage Vᵢₙ 101.

Figure 2 shows two logic functions used by the controller 110 to determine whether to provide the previously mentioned first control signal SRA or second control signal SRB. The first logic function is represented by a first AND gate 111, and the second logic function is represented by a second AND gate 112.

The first AND gate 111 requires three inputs to enable the controller 110 to provide the first control signal SRA. The first of these inputs is that the current measured by the first current sensor CTA 108 is greater than a first threshold W. The second of these inputs is that the current measured by the second current sensor CTB 109 is less than a second threshold X. Finally, the third input is that the signal which indicates the polarity of the input voltage Vᵢₙ 101 indicates that the input voltage Vᵢₙ 101 is positive.

The second AND gate 112 requires three inputs to enable the controller 110 to provide the second control signal SRB. The first of these inputs is that the current measured by the second current sensor CTB 109 is greater than a third threshold Y. The second of these inputs is that the current measured by the first current sensor CTA 108 is less than a fourth threshold Z. Finally, the third input is that the signal which indicates the polarity of the input voltage Vᵢₙ 101 indicates that the input voltage Vᵢₙ 101 is negative.

The second threshold X is less than or equal to the third threshold Y. Therefore, it is not possible for the current measured by the first current sensor CTB 109 to be both higher than the third threshold Y and less than the second threshold X. Thus, at least one of SRA and SRB must always be off. They can never both be on together, thus avoiding short-circuit conditions through Q1 and Q4 and similarly avoiding short-circuit conditions through Q2 and Q3.

Similarly, the fourth threshold Z is less than or equal to the first threshold W. Therefore, it is not possible for the current measured by the first current sensor CTA 108 to be both less than the fourth threshold Z and higher than the first threshold W. This likewise ensures that at least one of SRA and SRB must always be off and likewise avoids short-circuit conditions in the Q1-Q4 pathway and in the Q2-Q3 pathway.

Additionally, it is not possible for the signal indicating the polarity of the input voltage Vᵢₙ 101 to indicate that it is both positive and negative at the same time. Hence, the criteria for providing the first control signal SRA are mutually exclusive with the criteria for providing the second control signal SRB. Therefore, it is not possible for both SRA and SRB to be provided at the same time. This ensures that the first switch Q1 and the second switch Q2 (controlled by SRA) do not conduct at the same time as the third switch Q3 and the fourth switch Q4 (controlled by SRB). As a result, this control logic helps to avoid a short circuit across the synchronous rectifier.

For a purely resistive load, the direction of current flow through a synchronous rectifier may be relatively straightforward to predict. However, for a complex load, which also includes an inductive component or a capacitive component, it may be more difficult to predict the direction of current flow. Furthermore, the characteristics of an attached load are not always known when designing a synchronous rectifier. Thus, it may be important to have robust control logic, such as that described above, for controlling the operation of the synchronous rectifier to ensure safe operation regardless of the characteristics of the load.

By way of example, for a purely resistive load, the current measured by the first current sensor CTA 108 is only expected to be non-zero when the input voltage Vᵢₙ 101 is positive. Similarly, the current measured by the second current sensor CTB 109 is only expected to be non-zero when the input voltage Vᵢₙ 101 is negative.

Therefore, the control logic is configured to only allow the controller 110 to provide the first control signal SRA if an input signal 113 indicates that Vᵢₙ 101 is positive, even if a current exceeding the first threshold is measured by the first current sensor CTA 108 and a current less than the second threshold is measured by the second current sensor CTB 109. This provides an additional layer of robustness to the control.

Similarly, the control logic is configured to only enable the controller 110 to provide the second control signal SRB if an input signal 113 indicates that Vᵢₙ 101 is negative, even if a current exceeding the third threshold is measured by the second current sensor CTB 109 and a current less than the fourth threshold is measured by the first current sensor CTA 108.

This helps to ensure safe operation of the synchronous rectifier, particularly when connected to a complex load Z_{L} 103 which may make the flow of current through the synchronous rectifier 100 unpredictable.

Figure 3 shows a resonant voltage converter (specifically an LLC voltage converter) 300 for converting a direct input voltage V_{DC} 201 to a direct output voltage Vₒᵤₜ 102, applied across an attached load Z_{L} 103. The direct input voltage V_{DC} 201 may be provided by an attached voltage source (not shown), for instance a battery or the like. The LLC voltage converter 300 includes an input stage 200 and the synchronous rectifier 100 of Figure 1.

The input stage 200 includes an inverter 210 which is arranged to receive the direct input voltage V_{DC} 201, a resonant tank 220 connected to the inverter 210, and a transformer 230 connected to the resonant tank 220.

The inverter 210 includes a fifth switching arrangement 211, a sixth switching arrangement 212, a seventh switching arrangement 213 and an eighth switching arrangement 214.

The fifth switching arrangement 211 includes a fifth switch Q5 in parallel with a fifth diode D5. While these could be separate circuit elements, in this example the fifth switching arrangement is a MOSFET which has an integrated body diode D5 and switch Q5 in parallel. The sixth 212, seventh 213 and eighth 214 switching arrangements are similar to the fifth switching arrangement 211, with respective switches Q6, Q7, Q8 in parallel with diodes D6, D7, D8.

The inverter 210 in this example is a full-bridge inverter, but may otherwise have another inverter topology. For example, the inverter could instead be replaced with a half-bridge inverter or the like.

Thus, in this example, the fifth 211 and sixth 212 switching arrangements form a first inverter current path, while the seventh 213 and eighth 214 switching arrangements form a second inverter current path. Together, the first inverter current path and the second inverter current path form an H-bridge between the direct input voltage V_{DC} 201 and the output of the inverter 210.

The resonant tank 220 is connected to the inverter 210 and includes an inductor L_{R} 221 in series with a capacitor C_{R} 222. An input winding of the transformer 230 is connected to the resonant tank 220. An output winding of the transformer 230 is connected to the synchronous rectifier 100.

In use, the input stage 200 provides the input voltage Vᵢₙ 101 (by means of the transformer output winding) to the synchronous rectifier 100, which rectifies the input voltage Vᵢₙ 101 to provide the rectified output voltage Vₒᵤₜ 102 to the attached load Z_{L} 103. Operation of the LLC voltage converter 300 will now be described with reference to Figure 3.

A third control signal A, which may be provided by the controller 110 or another controller, causes the fifth Q5 and sixth Q6 switches to conduct. A fourth control signal B, which may be provided by the controller 110 or another controller, causes the seventh Q7 and eighth Q8 switches to conduct.

In use, the direct input voltage V_{DC} 201 is applied at the input to the inverter 210. When the first inverter current path conducts (i.e. when the fifth switch Q5 and the sixth switch Q6 conduct) the direct input voltage V_{DC} 201 is applied directly to the output of the inverter 210. This results in a positive voltage V_{DC}⁺ at the output of the inverter 210. Whereas, when the second inverter current path conducts (i.e. when the seventh switch Q7 and the eighth switch Q8 conduct) the direct voltage V_{DC} 201 is inverted, such that a negative voltage V_{DC}⁻ 201 is applied at the output of the inverter 210.

During operation, the LLC voltage converter 300 alternately provides the third control signal A and the second control signal B to the inverter 210. In this manner, the inverter 210 provides an alternating voltage V_{ALT} 215 at its output, which is a square wave voltage that alternates between V_{DC}⁺ and V_{oc}⁻. Typically, there is a delay between providing the third control signal A and the fourth control signal B to the inverter 210, and vice-versa (i.e. there is some dead time between the falling edge of A and the rising edge of B and some dead time between the falling edge of B and the rising edge of A), to prevent short circuit across the inverter 210 and thus ensure safe switching of the switching arrangements 211, 212, 213, 214.

In use, the resonant tank 220 receives the alternating voltage V_{ALT} 215 from the inverter 210, which causes the tank to oscillate. The output of the tank 220 provides a resonant voltage V_{RES} 223.

The resonant tank 220 has a resonant frequency, and a corresponding resonant period. The frequency at which energy oscillates between the inductor L_{R} 221 and the capacitor C_{R} 222 is based on the resonant frequency of the resonant tank 220.

The input winding of the transformer 230 receives the resonant voltage V_{RES} 223 from the resonant tank 220. This induces a voltage Vᵢₙ 101 across the output winding of the transformer 230. The transformer 230 may be a step-up or a step-down transformer. Alternatively, the transformer 310 may have unity gain.

The transformer 230 provides galvanic isolation between the direct input voltage V_{DC} 201 and the load Z_{L} 103. In step down applications, this may protect the load Z_{L} 103 from exposure to high voltages on the input side. In step up applications, this may protect the load Z_{L} 103 from high currents. Similarly, the galvanic isolation provided by the transformer 230 may protect the input stage 200, or the voltage source, from high currents or voltages caused by the load.

The induced voltage Vᵢₙ 101 across the output winding of the transformer 230 is provided as an input to the synchronous rectifier 100, and thus corresponds to the input voltage Vᵢₙ 101 shown in Figure 1.

In use, when the third control signal A is provided to the inverter 210, causing fifth Q5 and sixth Q6 switches to conduct, the input voltage Vᵢₙ is expected to be positive. Therefore, the third control signal A can be used as the input to the first AND gate 111 shown in Figure 2 to indicate a positive input voltage Vᵢₙ⁺.

Similarly, when the fourth control signal B is provided to the inverter 210, causing seventh Q7 and eighth Q8 switches to conduct, the input voltage Vᵢₙ is expected to be negative. Therefore, the fourth control signal B can be used as the input to the second AND gate 112 shown in Figure 2 to indicate a negative input voltage Vᵢₙ⁻.

Figure 4 shows an example of a logic table for the AND gates 111, 112 shown in Figure 2, for controlling operation of the synchronous rectifier 100 shown in Figure 3. The first two columns correspond to the first AND gate 111 and are used to determine whether to provide the first control signal SRA to enable the first switch Q1 and the second switch Q2 to conduct. The second two columns correspond to the second AND gate 112 and are used to determine whether to provide the second control signal SRB to enable the third switch Q3 and the fourth switch Q4 to conduct.

The first row in the table relates to the requirement that a signal must indicate that the input voltage Vᵢₙ 101 is positive to enable the first Q1 and second Q2 switches to conduct (for generating SRA), and that a signal must indicate that the input voltage Vᵢₙ 101 is negative to enable the third Q3 and fourth Q4 switches to conduct (for generating SRB).

In this case, the presence of the third control signal A, for enabling the fifth Q5 and sixth Q6 switches to conduct, indicates that Vᵢₙ 101 should be positive. Similarly, the presence of the fourth control signal B, for enabling the seventh Q7 and eighth Q8 switches to conduct, indicates that Vᵢₙ 101 should be negative. As previously mentioned, another signal, such as a measurement of the input voltage Vᵢₙ 101, could be used instead of the third (A) and fourth (B) control signals. However, using the inverter's control signals A and B may provide a relatively robust solution that is simple to implement.

The second row in the table relates to the requirement that the current measured by the current sensor on one of the rectifier current paths must be above a certain threshold for the switches on that rectifier current path to conduct.

For instance, to enable the first Q1 and second Q2 switches to start to conduct, the current measured by the first current sensor CTA 108, i.e. the current through the first diode D1 and the second diode D2, must be above the first threshold W. Additionally, for the first switch Q1 and the second switch Q2 to continue to conduct, the current measured by the first current sensor CTA 108 must remain above the first threshold W.

Similarly, to enable the third Q3 and fourth Q4 switches to start to conduct, the current measured by the second current sensor CTB 109, i.e. the current through the third diode D3 and the fourth diode D4, must be above the third threshold Y. Additionally, for the third switch Q3 and the fourth switch Q4 to continue to conduct, the current measured by the second current sensor CTB 109 must remain above the third threshold Y.

By using the current measured though the corresponding rectifier current path, a single current sensor can be used to control operation of both switches on a certain rectifier current path. By way of comparison, in previous arrangements which have used voltage sensors, a voltage sensor is typically required for each switching arrangement 104, 105, 106, 107 in order to control their respective operation.

Additionally, measurements of the current through the rectifier current paths may be less susceptible to interference than measurements of the small voltages across the switching arrangements 104, 105, 106, 107. Therefore, measurements of the currents through the rectifier current paths may be more reliable than voltage measurements across the switching arrangements 104, 105, 106, 107. This may be particularly true in step down applications, where the current is stepped up, as the currents through the rectifier are more likely to be large when compared with the voltages across the switching arrangements 104, 105, 106, 107.

The third and final row of the table relates to the requirement that the current measured by the current sensor on one of the rectifier current paths must be below a certain threshold for the switches on the other rectifier current path to conduct.

For instance, to enable the first Q1 and second Q2 switches to start to conduct, the current measured by the second current sensor CTB 109 must be below the second threshold X. Additionally, for the first switch Q1 and the second switch Q2 to continue to conduct, the current measured by the second current sensor CTB 109 must remain below the second threshold X.

Similarly, to enable the third Q3 and fourth Q4 switches to start to conduct, the current measured by the first current sensor CTA 108 must be below the fourth threshold Z. Additionally, for the third switch Q3 and the fourth switch Q4 to continue to conduct, the current measured by the first current sensor CTA 108 must remain below the fourth threshold Z.

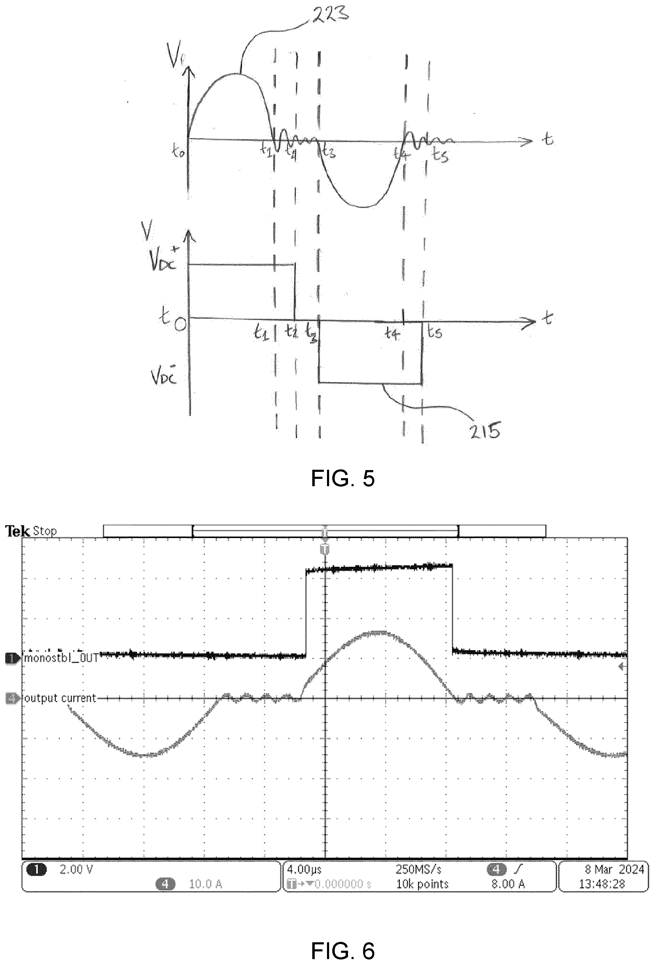

Figure 5 shows illustrative waveforms of the alternating voltage V_{ALT} 215 and the resonant voltage V_{RES} 223 shown in Figure 3 when the inverter 210 is operated with a switching frequency below the resonant frequency of the resonant tank 220.

At t₀, the third control signal A is provided to the inverter 210, and therefore the alternating voltage V_{ALT} 215 changes to V_{DC}⁺. The period of time between t₀ and t₁ is equal to half the resonant period of the resonant tank 220. Between to and t₁, the resonant voltage V_{RES} 223 increases and then decreases as energy in the tank oscillates between the inductor L_{R} 221 and the capacitor C_{R} 222.

However, as the switching frequency of the inverter 210 is below the resonant frequency, the resonant voltage returns to zero and starts to become negative at t₁, while the fifth Q5 and sixth Q6 switches are still conducting. In this situation, it becomes much harder to predict the behaviour of the current down-stream of the resonant tank 220.

At t₂, the third control signal A is turned off, and so the fifth Q5 and sixth Q6 switches stop conducting. As a result, the alternating voltage V_{ALT} 215 is zero. Between t₂ and t₃, there is period of dead time between turning off the fifth Q5 and sixth Q6 switches and turning on the seventh Q7 and eighth Q8 switches. The current down-stream of the resonant tank 220 continues to be difficult to predict during this time period.

At t₃, the fourth control signal B is provided to the inverter 210, and so the seventh Q7 and eighth Q8 switches start to conduct. Therefore, the alternating voltage V_{ALT} 215 changes to V_{DC}⁻. The period of time between t₃ and t₄ is equal to half the resonant period of the resonant tank 220. Between t₃ and t₄, the resonant voltage V_{RES} 223 decreases and then increases as energy in the tank oscillates between the inductor L_{R} 221 and the capacitor C_{R} 222.

However, as the switching frequency of the inverter 210 is below the resonant frequency, the resonant voltage returns to zero and starts to become positive at t₄, while the seventh Q7 and eighth Q8 switches are still conducting. At this point, it becomes much harder to predict the behaviour of the current down-stream of the resonant tank 220.

At t₅, the fourth control signal B is turned off, and so the seventh Q7 and eighth Q8 switches stop conducting. As a result, the alternating voltage V_{ALT} 215 is zero.

The previously mentioned control logic may require the presence of the third control signal A to enable the first Q1 and second Q2 switches to conduct, and similarly the presence of the fourth control signal B to enable the third Q3 and second Q4 switches to conduct. This limits operation of the first Q1 and second Q2 switches to the period of time between t₀ and t₂, and operation of the third Q3 and fourth Q4 switches to the period of time between t₃ and t₅.

However, for the reasons mentioned above, the presence of the third control signal A between t₁ and t₂ may not accurately indicate that the input voltage Vᵢₙ 101 to the synchronous rectifier 100 is positive during this time period. Similarly, the presence of the fourth control signal B between t₄ and t₅ may not accurately indicate that the input voltage Vᵢₙ 101 to the synchronous rectifier 100 is negative during this time period. Additionally, the flow of current through the rectifier may be difficult to predict, and may fluctuate, during these time periods.

Therefore, in this example the controller only enables the first Q1 and second Q2 switches of the synchronous rectifier 100 to conduct during the period of time between t₀ and t₁. Similarly, the controller only enables the third Q3 and fourth Q4 switches of the synchronous rectifier 100 to conduct during the period of time between t₃ and t₄.

Figure 6 shows an output of a one shot pulse generating circuit (the trace labelled "monostbl_OUT") together with the current flowing in the rectifier (the trace labelled "output current"). It can be seen here that both the rising and falling edges of the monostbl_OUT trace occur while the output current trace is positive, i.e. there is positive current flowing in the appropriate rectifier phase. The width of this pulse (the time between the rising edge and the falling edge) is less than half the resonant period of the resonant circuit. Comparing this graph to Figure 5, the rising edge of monostbl_OUT occurs shortly after to and the falling edge of monostbl_OUT occurs shortly before t₁.

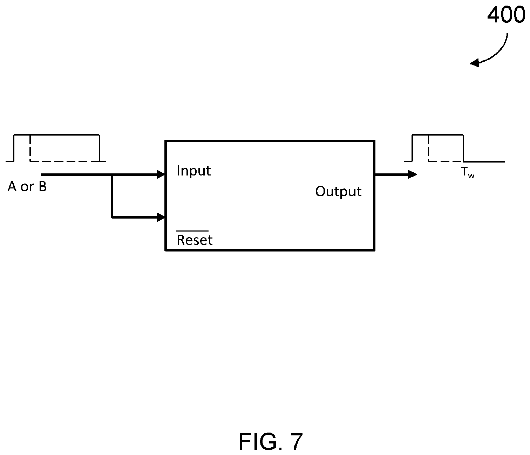

Figure 7 shows a resettable monostable 400 that may be used by the synchronous rectifier controller 110 shown in Figures 1 and 3. The controller 110 may include the resettable monostable 400, or the resettable monostable 400 may be external to the controller 110.

The resettable monostable 400 acts as a one-shot pulse generating circuit. It receives the third control signal A and/or the fourth control signal B as an input and it provides an output pulse. The output pulse is initiated by a rising edge at the trigger input of the resettable monostable 400 (marked "Input" in Fig. 6) and has a pulse width, Tw equal to half the resonant period of the resonant tank 220. However, the input pulse is also provided to an inverted reset input (marked *"R̅e̅s̅e̅t̅"* in Fig. 7) which resets the output pulse to zero early when the input signal drops to zero. Thus, the output pulse of the resettable monostable 400 is a time-limited version of the input signal, which is limited to half the resonant period Tw of the resonant tank 220.

For instance, the output pulse width of the resettable monostable is the same as the pulse width of the input signal if it is provided to the inverter 210 for less than half the resonant period T_{W} of the resonant tank 220. This is indicated by the dashed line in Figure 7.

However, if the input signal is provided to the inverter 210 for more than half the resonant period Tw of the resonant tank 220, the output pulse width of the resettable monostable is limited to half the resonant period T_{W}. This is indicated by the solid line in Figure 7.

When the input to the resettable monostable 400 is the third control signal A, the output of the resettable monostable 400 may be provided as the input to the first AND gate 111, shown in Figure 2, to indicate a positive polarity of the input voltage Vᵢₙ 101. Thus, it is possible to limit operation of the first Q1 and second Q2 switches of the synchronous rectifier 100 to the period of time between t₀ and t₁, shown in Figure 5.

Similarly, when the input to the resettable monostable 400 is the fourth control signal B, the output of the resettable monostable 400 may be provided as the input to the second AND gate 112, shown in Figure 2, to indicate a negative polarity of the input voltage Vᵢₙ 101. Thus, it is possible to limit operation of the third Q3 and fourth Q4 switches of the synchronous rectifier 100 to the period of time between t₃ and t₄, shown in Figure 5.

For the reasons mentioned above, this may improve the robustness and safety of operation of the synchronous rectifier 100.

It will be appreciated that the examples described above implement several features of this disclosure which need not all be implemented in every example. In particular, it will be appreciated that not all control elements need always be employed. For example, in some examples, control of two switching arrangements (e.g. Q1 and Q2) may be controlled based on the current sensed by current sensor CTA without requiring any additional signals from current sensor CTB and/or without requiring any additional signals from the input side (e.g. inverter signals A or B). This may for example be the case where the rectifier is a half bridge (e.g. where there is no second rectifier current path, i.e. no third Q3 or fourth Q4 switching arrangements).

It will likewise be appreciated that in some examples, control of the rectifier switching paths need not necessarily be the same. In some such examples, control of one switch on one rectifier current path (e.g. switch Q1) and one switch on another rectifier current path (e.g. switch Q3) based on the same current sensor (e.g. CTA 108 being used both to enable Q1 and disable Q3) provides improved rectifier control. The further controls associated with the remaining switches and/or the controls based on inverter input signals may be optional in such examples.

It will likewise be appreciated that in some examples, control of the rectifier switching paths based on the time-limited outputs of the inverter signals (e.g. via a resettable monostable or other one-shot generating circuit) may provide improved rectifier control and in such examples further control based on the current sensors (e.g. CTA and/or CTB) may be optional.

It will be appreciated by those skilled in the art that this disclosure has been illustrated by describing one or more specific examples thereof, but is not limited to these examples; many variations and modifications are possible, within the scope of the accompanying claims.

## Claims

1. A synchronous rectifier comprising:
a first rectifier current path comprising a first switching arrangement and a second switching arrangement arranged in series;
the first switching arrangement comprising a first switch operable to selectively provide a first current path through the first switching arrangement;
the second switching arrangement comprising a second switch operable to selectively provide a first current path through the second switching arrangement;
the synchronous rectifier further comprising:
a first current sensor arranged to measure a current through the first rectifier current path; and
a controller arranged to operate the first switch and the second switch based on the current measured by the first current sensor.

2. A synchronous rectifier as claimed in claim 1, wherein the controller is arranged to operate the first switch and the second switch to a non-conducting state if the current measured by the first current sensor is less than a first threshold.

3. A synchronous rectifier as claimed in any preceding claim, wherein the first switching arrangement comprises a second current path arranged in parallel with the first current path and configured to allow current to flow through the second current path only in a first direction; and
the second switching arrangement comprises a second current path arranged in parallel with the first current path, and configured to allow current to flow through the second current path only in a first direction.

4. A synchronous rectifier as claimed in any preceding claim, comprising a second rectifier current path comprising a third switching arrangement;
the third switching arrangement comprising a third switch operable to selectively provide a first current path through the third switching arrangement;
wherein the controller is arranged to operate the third switch based on the current measured by the first current sensor.

5. A synchronous rectifier as claimed in claim 4, comprising a second current sensor arranged to measure a current through the second rectifier current path;
wherein the controller is arranged to operate the first switch and the second switch based on the current measured by the second current sensor.

6. A synchronous rectifier as claimed in claim 5, wherein the controller is arranged to operate the first switch and the second switch to a non-conducting state if the current measured by the second current sensor is greater than a third threshold.

7. A synchronous rectifier as claimed in claim 4, 5 or 6, wherein the controller is arranged to operate the first switch and the second switch to a conducting state when:
i) the first current sensor detects a first current condition;
ii) the second current sensor detects a second current condition; and
iii) an input voltage applied to the first rectifier current path is determined to have a predetermined polarity.

8. A synchronous rectifier as claimed in claim 7, wherein the controller comprises an AND gate which is arranged to receive a first signal indicative of the first condition from the first current sensor, a second signal indicative of the second condition from the second current sensor, and a third signal indicative of the input voltage polarity from an inverter controller, and wherein the AND gate is arranged to output a control signal for controlling the first switch and the second switch.

9. A synchronous rectifier comprising:
a first rectifier current path comprising a first switching arrangement; and
a second rectifier current path comprising a second switching arrangement;
the first switching arrangement comprising a first switch operable to selectively provide a first current path through the first switching arrangement;
the second switching arrangement comprising a second switch operable to selectively provide a first current path through the second switching arrangement;
the synchronous rectifier further comprising:
a first current sensor arranged to measure a current through the first rectifier current path; and
a controller arranged to operate the first switch and the second switch based on the current measured by the first current sensor.

10. A converter comprising:
an input stage arranged to provide an input waveform; and
a synchronous rectifier as claimed in any of the preceding claims, arranged to rectify the input waveform.

11. A converter as claimed in claim 10, wherein the input stage is a switched input stage comprising at least a first input stage switch arranged to be driven by a first input switch drive signal; and
wherein the controller is arranged to operate the first switch and the second switch based on the first input switch drive signal.

12. A converter as claimed in claim 11, wherein the first input switch drive signal is provided to a one shot pulse generating circuit and wherein the one shot pulse generating circuit is arranged to start generating an output pulse when it receives a start of an input pulse from the first input switch drive signal and is arranged to stop generating an output pulse at the earlier of i) an end of the input pulse or ii) when an output pulse time limit is reached; and
wherein the controller is arranged to operate the first switch and the second switch based on the output pulse from the one shot pulse generating circuit.

13. A converter as claimed in claim 12, wherein the converter is a resonant converter, wherein the input stage comprises a resonant circuit having a resonant period; and
wherein the output pulse time limit is equal to or less than half the resonant period.

14. A converter comprising:
an input stage arranged to provide an output waveform;
a synchronous rectifier arranged to rectify the output waveform; and
a controller;
the synchronous rectifier comprising a first rectifier current path comprising a first switching arrangement;
the first switching arrangement comprising a first switch operable to selectively provide a first current path through the first switching arrangement;
the input stage comprising a resonant circuit, having a resonant period, the input stage being arranged to receive an alternating input waveform;
wherein, the controller is arranged to operate the first switch in a non-conducting state if the alternating input waveform has a first polarity for longer than a maximum duration;
wherein the maximum duration is equal to or less than half the resonant period.

15. A method of operating a synchronous rectifier, the synchronous rectifier comprising:
a first rectifier current path comprising a first switching arrangement and a second switching arrangement arranged in series;
the first switching arrangement comprising a first switch operable to selectively provide a first current path through the first switching arrangement;
the second switching arrangement comprising a second switch operable to selectively provide a first current path through the second switching arrangement;
the method comprising:
measuring a current through the first rectifier current path; and
operating the first switch and the second switch based on the current measured through the first rectifier current path.
